# EUROPÄISCHE PATENTSCHRIFT

(11) **EP 3 248 402 B1**
(45) Veröffentlichungstag und Bekanntmachung des Hinweises auf die Patenterteilung: **10.10.2018**
(21) Anmeldenummer: 15816688.4
(22) Anmeldetag: 08.12.2015
(51) Int. Cl.: H04W 4/40, G06F 17/30

(54) **VERFAHREN ZUM VERARBEITEN EINER FAHRZEUG-ZU-X-NACHRICHT, ELEKTRONISCHE STEUERUNGSVORRICHTUNG UND SPEICHERMEDIUM**
METHOD FOR PROCESSING A VEHICLE-TO-X MESSAGE, ELECTRONIC CONTROL DEVICE AND STORAGE MEDIUM
PROCÉDÉ DE TRAITEMENT D'UN MESSAGE V2X, DISPOSITIF DE COMMANDE ÉLECTRONIQUE ET SUPPORT D'ENREGISTREMENT

(30) Priorität: 21.01.2015 DE 102015200955
(43) Veröffentlichungstag der Anmeldung: 29.11.2017
(73) Patentinhaber: Continental Teves AG & Co. OHG, 60488 Frankfurt am Main (DE)
(72) Erfinder: MENZEL, Marc, 35096 Weimar (Lahn) (DE); STÄHLIN, Ulrich, 65760 Eschborn (DE)
(86) Internationale Anmeldenummer: PCT/EP2015/078972
(87) Internationale Veröffentlichungsnummer: WO 2016/116209

(56) Entgegenhaltungen:
- EP-A1- 0 675 024
- DE-A1-102013 206 661
- US-A1- 2006 093 144
- US-A1- 2012 222 130
- US-A1- 2014 280 778

## Beschreibung

Die Erfindung betrifft ein Verfahren zum Verarbeiten einer Fahrzeug-zu-X-Nachricht, welche einen Daten enthaltenden Kopfteil und einen Daten enthaltenden Hauptteil aufweist. Die Erfindung betrifft des Weiteren eine elektronische Steuerungsvorrichtung sowie ein Speichermedium zur Ausführung des Verfahrens.

Fahrzeug-zu-X-Kommunikation, auch als Car2X-Kommunikation oder C2X-Kommunikation bezeichnet, basiert grundsätzlich auf den Standards IEEE 802.11p, ITS-G5 und IEEE 1609. In Feldtests wurde bereits nachgewiesen, dass Fahrzeug-zu-X-Kommunikation auf der Grundlage dieser Standards zuverlässig funktioniert.

Ein relevanter Bestandteil von Fahrzeug-zu-X-Kommunikation ist das sogenannte Geo-Networking. Dies bedeutet, dass ein Verfahren zum Weiterleiten von Nachrichten vorgesehen ist, welches lediglich auf Positionsinformationen beruht. Daher hat jedes versendete Datenpaket einer Fahrzeug-zu-X-Nachricht im Kopfteil typischerweise Informationen wie Sendezeit und Absenderposition. Aus diesen Informationen von empfangenen Nachrichten kann eine sogenannte Nachbarschaftstabelle oder Neighborhood-Tabelle erstellt werden, in welcher gespeichert wird, von welchen Fahrzeugen an welchen Positionen in der jüngsten Vergangenheit bereits Nachrichten empfangen wurden. Damit kann auch festgestellt werden, ob eine Nachricht bereits von einer anderen Stelle gesendet beziehungsweise weitergeleitet wurde. Auf Basis dieser Informationen wird dann entschieden, ob eine empfangene Nachricht weitergeleitet wird oder ob dies von einer anderen Station aus der Neighborhood-Tabelle erledigt werden wird. Dieses Vorgehen ist Teil einer sogenannten Decentralized Congestion Control.

Es hat sich gezeigt, dass bei der Implementierung von Geo-Networking gemäß dem Stand der Technik ein hoher Speicherbedarf besteht, welcher insbesondere dann auftritt, wenn sich zahlreiche Sender in der Umgebung befinden.

Aus der Druckschrift US 2012222130 A1 ist eine Vorrichtung zum Gewährleisten der Integrität von Echtzeit-Fahrzeugdaten offenbart. Initiale Authentifizierungsdaten (IAD) werden durch eine Einheit generiert, indem ein Signaturvorgang auf Blockdaten mittels Signaturschlüssel durchgeführt wird. Ein erster Hash-Teil erzeugt einen ersten IAD Wert über die geteilten Blockdaten. Ein sekundärer Hash-Teil erzeugt einen Sekundär-IAD-Wert durch das Hashing des ersten IAD Wertes.
Es ist deshalb eine Aufgabe der Erfindung, ein Verfahren zum Verarbeiten von Fahrzeug-zu-X-Nachrichten bereitzustellen, bei welchem der Speicherbedarf verringert ist. Es ist des Weiteren eine Aufgabe der Erfindung, eine elektronische Steuerungsvorrichtung bereitzustellen, welche dazu konfiguriert ist, ein solches Verfahren auszuführen. Außerdem ist es eine Aufgabe der Erfindung, ein nichtflüchtiges computerlesbares Speichermedium bereitzustellen, auf welchem Programmcode gespeichert ist, bei dessen Ausführung ein solches Verfahren ausgeführt wird.

Dies wird erfindungsgemäß durch ein Verfahren nach Anspruch 1, eine elektronische Steuerungsvorrichtung nach Anspruch 13 und ein nichtflüchtiges computerlesbares Speichermedium nach Anspruch 15 erreicht. Vorteilhafte Ausführungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft ein Verfahren zum Verarbeiten einer Fahrzeug-zu-X-Nachricht, insbesondere zum Verarbeiten und / oder Erstellen einer Neighborhood-Tabelle, welche einen Daten enthaltenden Kopfteil und einen Daten enthaltenden Hauptteil aufweist. Das Verfahren weist folgende Schritte auf:
- Anwenden einer Hashfunktion auf den Hauptteil, welche einen Hashwert liefert, und
- Abspeichern des Hashwerts und zumindest eines Teils der Daten des Kopfteils in einer Datenbank.

Mittels des erfindungsgemäßen Verfahrens kann der Speicherbedarf einer aus empfangenen Fahrzeug-zu-X-Nachrichten erstellten Tabelle erheblich reduziert werden. Dies liegt daran, dass ein Hashwert, welcher durch eine Hashfunktion aus einem Hauptteil erzeugt wird, üblicherweise erheblich weniger Speicherplatz benötigt als der Hauptteil selbst. Beispielsweise kann ein Hashwert weniger Bits aufweisen. Gerade bei einer hohen Anzahl von in der Nähe befindlichen Sendern, für welche ein Fahrzeug-zu-X-Kommunikationssystem ausgelegt werden soll, reduziert das erfindungsgemäße Verfahren erheblich den nötigen vorzuhaltenden Speicherplatz und erlaubt damit beispielsweise die Verwendung günstigerer Mikrocontroller oder anderer Bauelemente. Eine Neighborhood-Tabelle mit diesen Informationen ist besonders vorteilhaft, weil alle wesentlichen Funktionen der Tabelle bei einem geringeren Speicherbedarf bereitstellbar sind. Dies ist insbesondere deshalb von besonderer Relevanz, weil Fahrzeug-zu-X-Kommunikation ein kooperatives System ist, welches sich nur dann erfolgreich implementieren lässt, wenn möglichst schnell möglichst viele Fahrzeuge mit einer Technik ausgestattet sind, welche eine Teilnahme an der Fahrzeug-zu-X-Kommunikation erlaubt. Durch die Reduzierung von Bauteilkosten kann dabei insbesondere die Hemmschwelle gesenkt werden, preisgünstige Fahrzeuge entsprechend auszurüsten.

Gemäß einer Ausführung wird der Hashwert dadurch in der Datenbank abgespeichert, dass er als Teil eines Datensatzes, welcher auch den Teil der Daten des Kopfteils enthält, in der Datenbank abgespeichert wird. Ein solcher Datensatz kann dabei beispielsweise die entsprechenden Teile des Kopfteils sowie den Hashwert, welcher von der Hashfunktion berechnet wurde, enthalten. Der Datensatz wird typischerweise an einer bestimmten Stelle in der Datenbank abgespeichert, welche in geeigneter und bekannter Weise adressiert ist.

Die Hashwerte können insbesondere in der Datenbank sortiert abgespeichert werden. Dies erleichtert das Auffinden eines Hashwerts.

Gemäß einer weiteren, beispielsweise hierzu alternativen Ausführung wird der Hashwert dadurch in der Datenbank abgespeichert, dass ein Datensatz, welcher den Teil der Daten des Kopfteils enthält, an einer Adresse in der Datenbank abgespeichert wird, welche dem Hashwert entspricht.

Dies ermöglicht eine noch weitere Verringerung des benötigten Speichers, da der Hashwert selbst als Adresse für einen Datensatz dient, in welchem nur noch der Teil der Daten des Kopfteils abgespeichert wird. Eine zusätzliche Adressierung ist nicht erforderlich. Diese Ausführungsform des Verfahrens kann insbesondere bei Verwendung von Hashfunktionen vorteilhaft sein, welche verhältnismäßig kurze Hashwerte liefern. Wenn ermittelt werden soll, ob zu einem bestimmten Hashwert bereits ein Datensatz vorhanden ist, so kann an der diesem Wert entsprechenden Adresse in der Datenbank nachgeschaut werden. Ist dort ein Datensatz mit dem Teil der Daten des Kopfteils vorhanden, so wurde bereits eine Nachricht mit einem solchen Hashwert empfangen. Ist dort kein Datensatz gespeichert, so wurde noch keine Nachricht mit einem solchen Hashwert empfangen.

Bei Identität des gelieferten Hashwerts mit zumindest einem bereits in der Datenbank gespeicherten Hashwert kann vorzugsweise ein Verweis auf jeweilige Teile der Daten der Kopfteile enthaltende Datensätze an einer Adresse in der Datenbank abgespeichert werden, welche dem Hashwert entspricht. Dies entspricht einer vorteilhaften Implementierung eines Verfahrens, welche der Tatsache Rechnung trägt, dass unter Umständen Nachrichten mit unterschiedlichen Kopfteilen empfangen werden, deren Hauptteil jedoch einen identischen Hashwert liefert.

Bevorzugt enthält der Kopfteil als Daten zumindest eine Sendezeit und eine Absenderposition. Damit enthält der Kopfteil wichtige Werte, welche zur Verarbeitung und Auswertung von Fahrzeug-zu-X-Daten nützlich sind. Der Teil der Daten des Kopfteils, welcher mit dem Hashwert abgespeichert wird, kann dementsprechend die Sendezeit und die Absenderposition enthalten. Damit stehen auch diese Daten zur Verfügung. Der Kopfteil und/oder der Teil des Kopfteils, welcher mit dem Hashwert abgespeichert wird, kann auch nur die Sendezeit oder nur die Absenderposition enthalten.

Grundsätzlich sei erwähnt, dass der Teil der Daten des Kopfteils beispielsweise sowohl den gesamten Kopfteil wie auch nur einen Bruchteil des Kopfteils beziehungsweise der Daten des Kopfteils umfassen kann.

Gemäß einer Ausführung enthält der Teil der Daten des Kopfteils die Absenderposition, wobei ferner die Absenderposition nur teilweise abgespeichert wird. Insbesondere kann sie unter Auslassung grober Positionsangaben abgespeichert werden. Damit kann der Speicherbedarf noch weiter verringert werden. Die Eindeutigkeit der Positionsinformation wird hierdurch zwar reduziert, jedoch ist in typischen Implementierungen von Fahrzeug-zu-X-Kommunikation auch die Empfangsreichweite eingeschränkt. Bei passender Wahl einer Anzahl von abgeschnittenen oberen Bits kann somit trotzdem eine eindeutige Neighborhood-Tabelle erstellt werden. Idealerweise wird dabei die Eindeutigkeit der Positionsinformation mindestens um einen Faktor von 2, 3 oder 4 größer gewählt als die größte zu erwartende Reichweite.

Gemäß einer bevorzugten Ausführung ist die Datenbank eine Nachbarschaftstabelle oder Neighborhood-Tabelle. Derartige Tabellen können in typischen Implementierungen einer Fahrzeug-zu-X-Kommunikation verwendet werden, um ein effizientes Geo-Networking auszuführen.

Gemäß einer Ausführung weist das Verfahren ferner einen Schritt des Überprüfens auf, ob bereits ein Datensatz in der Datenbank gespeichert ist, bei welchem der Hashwert und der Teil der Daten des Kopfteils identisch sind. Damit kann ermittelt werden, ob eine solche Nachricht bereits empfangen wurde. Es kann dabei typischerweise davon ausgegangen werden, dass unterschiedliche Hauptteile von Nachrichten auch unterschiedliche Hashwerte erzeugen. Sofern keine Nachricht mit identischem Hashwert enthalten ist, kann typischerweise davon ausgegangen werden, dass eine solche Nachricht noch nicht empfangen wurde.

Wenn ein Datensatz mit identischem Hashwert und identischem Teil der Daten des Kopfteils ermittelt wurde, wird gemäß einer Ausführung die Nachricht nicht weiter verarbeitet und/oder nicht weitergeleitet und/oder nur weitergeleitet, wenn die Weiterleitungsbedingungen des ETSI Geo-Networking erfüllt sind, und/oder ihr Hashwert und ihr Teil der Daten des Kopfteils werden nicht in der Datenbank gespeichert. Damit kann in geeigneter Weise darauf reagiert werden, dass die Nachricht bereits vorher empfangen wurde. Der Verzicht auf eine Weiterleitung schont dabei beispielsweise die Ressourcen und die zur Verfügung stehende Bandbreite des Systems.

Bevorzugt wird der Hashwert berechnet, ohne den Hauptteil vorher zu decodieren. Insbesondere kann auf eine ansonsten häufig übliche ASN.1-Decodierung verzichtet werden. Damit kann weiter Rechenzeit eingespart werden.

Die Hashfunktion ist bevorzugt aus der folgenden Gruppe von Hashfunktionen ausgewählt:
- MD2,
- MD4,
- MD5,
- MD6,
- SHA-1,
- SHA-256,
- SHA-384,
- SHA-512,
- Whirlpool,
- CRC, insbesondere crc32,
- FFT.

Derartige Hashfunktionen haben sich für typische Einsatzzwecke als vorteilhaft erwiesen.

Die Erfindung betrifft des Weiteren eine elektronische Steuerungsvorrichtung, insbesondere eine Fahrzeug-zu-X-Kommunikationsvorrichtung, welche dazu konfiguriert ist, ein erfindungsgemäßes Verfahren auszuführen. Hinsichtlich des Verfahrens kann dabei auf alle beschriebenen Ausführungen und Varianten zurückgegriffen werden. Erläuterte Vorteile gelten entsprechend.

Die elektronische Steuerungsvorrichtung kann insbesondere Prozessormittel und Speichermittel aufweisen, wobei in den Speichermitteln Programmcode gespeichert ist, bei dessen Ausführung sich die Prozessormittel in definierter Weise verhalten, beispielsweise ein erfindungsgemäßes Verfahren ausführen.

Das erfindungsgemäße Verfahren wird insbesondere vorteilhaft auf oder mit einer elektronischen Steuerungsvorrichtung, beispielsweise einer Fahrzeug-zu-X-Kommunikationsvorrichtung, ausgeführt. Hierbei kann es sich beispielsweise um eine erfindungsgemäße elektronische Steuerungsvorrichtung handeln.

Die elektronische Steuerungsvorrichtung kann insbesondere eine Hardware-Beschleunigung für die Hashfunktion aufweisen. Dies erlaubt eine erhebliche Beschleunigung der Ausführung oder Verkürzung der erforderlichen Rechenzeit.

Die Erfindung betrifft des Weiteren ein nichtflüchtiges computerlesbares Speichermedium, auf welchem Programmcode gespeichert ist, bei dessen Ausführung ein erfindungsgemäßes Verfahren ausgeführt wird. Auch hierbei kann auf alle beschriebenen Ausführungen und Varianten zurückgegriffen werden.

Weitere Merkmale und Vorteile wird der Fachmann den nachfolgend mit Bezug auf die beigefügte Zeichnung beschriebenen Ausführungsbeispielen entnehmen. Dabei zeigen:
- Fig. 1:: eine Fahrzeug-zu-X-Nachricht,
- Fig. 2:: eine Datenbank gemäß einem ersten Ausführungsbeispiel, und
- Fig. 3:: eine Datenbank gemäß einem zweiten Ausführungsbeispiel.

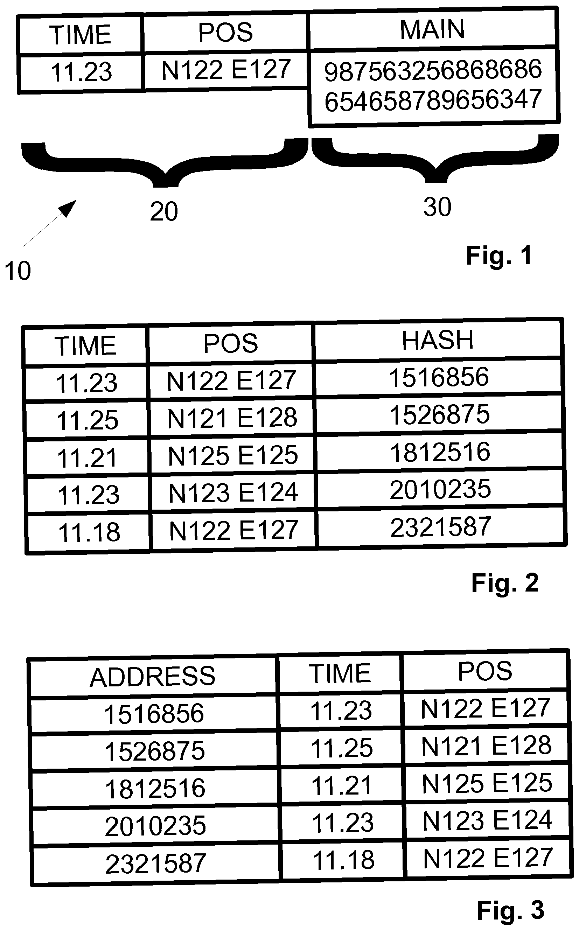

Fig. 1 zeigt eine Fahrzeug-zu-X-Nachricht 10. Die Fahrzeug-zu-X-Nachricht 10 weist einen Kopfteil 20 und einen Hauptteil 30 auf. Der Kopfteil 20 enthält als Daten zwei Felder, nämlich "TIME" und "POS". Das Feld "TIME" enthält die Uhrzeit, zu welcher die Nachricht 10 gesendet wurde. Das Feld "POS" enthält die Position des Senders zum Zeitpunkt des Aussendens. Der Hauptteil 30 enthält ein Feld "MAIN", in welchem Daten des Hauptteils gespeichert sind. Wie aus Fig. 1 zu sehen ist, nehmen diese Daten den größten Teil der Nachricht 10 ein. Der Hauptteil 30 ist dabei ASN.1-codiert, so dass die in ihm enthaltene Information erst nach einer entsprechenden Decodierung zugänglich ist.

Fig. 2 zeigt eine Tabelle, bpsw. eine Neighborhood-Tabelle, mit Einträgen einer Datenbank, wobei in dieser Datenbank insgesamt fünf Einträge gespeichert sind. Der oberste Eintrag entspricht der in Fig. 1 dargestellten Nachricht. Dabei wurde der Kopfteil 20 mit seinen Feldern "TIME" und "POS" unverändert übernommen. Anstatt des Hauptteils 30 wurde jedoch ein Hashwert mittels einer Hashfunktion berechnet, welcher erheblich kürzer ist. Dieser wurde ebenfalls in der Datenbank abgespeichert. Entsprechend verhält es sich mit den anderen Nachrichten, welche unterschiedliche Werte der Felder haben.

Wie gezeigt sind die Datensätze der in Fig. 2 dargestellten Tabelle derart geordnet, dass die Hashwerte aufsteigen. Wenn eine neue Nachricht empfangen wird, kann somit einfach ermittelt werden, ob bereits eine Nachricht mit einem solchen Hashwert vorhanden ist. Die Sortierung erleichtert dabei diesen Vorgang. Da grundsätzlich davon ausgegangen werden kann, dass bei Verwendung einer geeigneten Hashfunktion ein anderer Hauptteil auch einen anderen Hashwert erzeugt, kann auf diese Weise zuverlässig ermittelt werden, ob bereits eine Nachricht mit identischem Hauptteil empfangen wurde oder nicht. Der Speicherbedarf wird jedoch im Vergleich zu einer vollständigen Abspeicherung des Hauptteils 30 deutlich verringert.

In Fig. 2 sind die einzelnen Datensätze, welche den Zeilen der dargestellten Tabelle entsprechen, durch eine übliche Datenbankverwaltung adressiert.

Im Gegensatz dazu ist in Fig. 3 eine Tabelle dargestellt, in welcher der Hashwert als Adresse verwendet wird. Dies wird durch die erste, mit "ADDRESS" bezeichnete Spalte angezeigt. Der Hashwert adressiert somit die beiden Felder "TIME" und "POS", in welchen der Kopfteil 10 gespeichert wird. Auf eine zusätzliche Adressierung kann damit verzichtet werden. Dies verringert den insgesamt notwendigen Speicherbedarf nochmals.

Allgemein sei darauf hingewiesen, dass unter Fahrzeug-zu-X-Kommunikation insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug-Kommunikation oder um Fahrzeug-zu-Infrastruktur-Kommunikation handeln. Sofern im Rahmen dieser Anmeldung auf eine Kommunikation zwischen Fahrzeugen Bezug genommen wird, so kann diese grundsätzlich beispielsweise im Rahmen einer Fahrzeug-zu-Fahrzeug-Kommunikation erfolgen, welche typischerweise ohne Vermittlung durch ein Mobilfunknetz oder eine ähnliche externe Infrastruktur erfolgt und welche deshalb von anderen Lösungen, welche beispielsweise auf ein Mobilfunknetz aufbauen, abzugrenzen ist. Beispielsweise kann eine Fahrzeug-zu-X-Kommunikation unter Verwendung der Standards IEEE 802.11p oder IEEE 1609.4 erfolgen. Eine Fahrzeug-zu-X-Kommunikation kann auch als C2X-Kommunikation bezeichnet werden. Die Teilbereiche können als C2C (Car-to-Car) oder C2I (Car-to-Infrastructure) bezeichnet werden. Die Erfindung schließt jedoch Fahrzeug-zu-X-Kommunikation mit Vermittlung beispielsweise über ein Mobilfunknetz explizit nicht aus.

Erwähnte Schritte des erfindungsgemäßen Verfahrens können in der angegebenen Reihenfolge ausgeführt werden. Sie können jedoch auch in einer anderen Reihenfolge ausgeführt werden. Das erfindungsgemäße Verfahren kann in einer seiner Ausführungen, beispielsweise mit einer bestimmten Zusammenstellung von Schritten, in der Weise ausgeführt werden dass keine weiteren Schritte ausgeführt werden. Es können jedoch grundsätzlich auch weitere Schritte ausgeführt werden, auch solche welche nicht erwähnt sind.

Die zur Anmeldung gehörigen Ansprüche stellen keinen Verzicht auf die Erzielung weitergehenden Schutzes dar.

Sofern sich im Laufe des Verfahrens herausstellt, dass ein Merkmal oder eine Gruppe von Merkmalen nicht zwingend nötig ist, so wird anmelderseitig bereits jetzt eine Formulierung zumindest eines unabhängigen Anspruchs angestrebt, welcher das Merkmal oder die Gruppe von Merkmalen nicht mehr aufweist. Hierbei kann es sich beispielsweise um eine Unterkombination eines am Anmeldetag vorliegenden Anspruchs oder um eine durch weitere Merkmale eingeschränkte Unterkombination eines am Anmeldetag vorliegenden Anspruchs handeln. Derartige neu zu formulierende Ansprüche oder Merkmalskombinationen sind als von der Offenbarung dieser Anmeldung mit abgedeckt zu verstehen.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar. Hieraus entstehende Merkmalskombinationen sind als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen. Diese Merkmale können auch beliebig mit anderen Merkmalen kombiniert werden.

Merkmale, die lediglich in der Beschreibung offenbart sind oder Merkmale, welche in der Beschreibung oder in einem Anspruch nur in Verbindung mit anderen Merkmalen offenbart sind, können grundsätzlich von eigenständiger erfindungswesentlicher Bedeutung sein. Sie können deshalb auch einzeln zur Abgrenzung vom Stand der Technik in Ansprüche aufgenommen werden.

## Patentansprüche

1. Verfahren zum Verarbeiten einer Fahrzeug-zu-X-Nachricht (10),
welche einen Daten enthaltenden Kopfteil (20) und einen Daten enthaltenden Hauptteil (30) aufweist,
**dadurch gekennzeichnet, dass** das Verfahren folgende Schritte aufweist:
- Anwenden einer Hashfunktion auf den Hauptteil (30), welche einen Hashwert liefert, und
- Abspeichern des Hashwerts und zumindest eines Teils der Daten des Kopfteils (20) in einer Datenbank.

2. Verfahren nach Anspruch 1,
- wobei der Hashwert dadurch in der Datenbank abgespeichert wird, dass er als Teil eines Datensatzes, welcher auch den Teil der Daten des Kopfteils (20) enthält, in der Datenbank abgespeichert wird.

3. Verfahren nach Anspruch 1,
- wobei der Hashwert dadurch in der Datenbank abgespeichert wird, dass ein Datensatz, welcher den Teil der Daten des Kopfteils (20) enthält, an einer Adresse in der Datenbank abgespeichert wird, welche dem Hashwert entspricht.

4. Verfahren nach Anspruch 3,
- wobei bei Identität des gelieferten Hashwerts mit zumindest einem bereits in der Datenbank gespeicherten Hashwert ein Verweis auf jeweilige Teile der Daten der Kopfteile (20) enthaltende Datensätze an einer Adresse in der Datenbank abgespeichert wird, welche dem Hashwert entspricht.

5. Verfahren nach einem der vorhergehenden Ansprüche,
- wobei der Kopfteil (20) als Daten eine Sendezeit und eine Absenderposition enthält.

6. Verfahren nach Anspruch 5,
- wobei der Teil der Daten des Kopfteils (20) die Sendezeit und die Absenderposition enthält.

7. Verfahren nach Anspruch 5 oder 6,
- wobei der Teil der Daten des Kopfteils (20) die Absenderposition enthält, und
- wobei die Absenderposition nur teilweise, insbesondere unter Auslassung grober Positionsangaben, abgespeichert wird.

8. Verfahren nach einem der vorhergehenden Ansprüche,
- wobei die Datenbank eine Nachbarschaftstabelle oder Neighborhood-Tabelle ist.

9. Verfahren nach einem der vorhergehenden Ansprüche, welches ferner folgenden Schritt aufweist:
- Überprüfen, ob bereits ein Datensatz in der Datenbank gespeichert ist, bei welchem der Hashwert und der Teil der Daten des Kopfteils (20) identisch sind.

10. Verfahren nach Anspruch 9,
- wobei wenn ein Datensatz mit identischem Hashwert und identischem Teil des Kopfteils (20) ermittelt wurde die Nachricht (10) nicht weiter verarbeitet wird, und/oder nicht weitergeleitet wird, und/oder nur weitergeleitet wird, wenn die Weiterleitungsbedingungen des ETSI Geo-Networking erfüllt sind, und/oder ihr Hashwert und ihr Teil der Daten des Kopfteils (20) nicht in der Datenbank gespeichert werden.

11. Verfahren nach einem der vorhergehenden Ansprüche,
- wobei der Hashwert berechnet wird, ohne den Hauptteil (30) vorher zu dekodieren.

12. Verfahren nach einem der vorhergehenden Ansprüche,
- wobei die Hashfunktion aus folgender Gruppe von Hashfunktionen ausgewählt ist:
- MD2,
- MD4,
- MD5,
- MD6,
- SHA-1,
- SHA-256,
- SHA-384,
- SHA-512,
- Whirlpool,
- CRC, insbesondere crc32,
- FFT.

13. Elektronische Steuerungsvorrichtung, insbesondere Fahrzeug-zu-X-Kommunikationsvorrichtung, welche dazu konfiguriert ist, ein Verfahren nach einem der vorhergehenden Ansprüche auszuführen.

14. Elektronische Steuerungsvorrichtung nach Anspruch 13,
- welche eine Hardwarebeschleunigung für die Hashfunktion aufweist.

15. Nichtflüchtiges computerlesbares Speichermedium, auf welchem Programmcode gespeichert ist, bei dessen Ausführung ein Verfahren nach einem der Ansprüche 1 bis 12 ausgeführt wird.

## Claims

1. A method for processing a vehicle-to-X message (10),
which has a data-containing header (20) and a data-containing body (30),
**characterised in that** the method has the following steps:
- Application of a hash function to the body (30), which supplies a hash value,
and
- Storage of the hash value and at least a part of the data of the header (20) in a database.

2. The method according to Claim 1,
- wherein the hash value is stored in the database in that it is stored as part of a data set, which also contains part of the data of the header (20), in the database.

3. The method according to Claim 1,
- wherein the hash value is stored in the database in that a data set which contains part of the data of the header (20) is stored at an address in the database, which corresponds to the hash value.

4. The method according to Claim 3,
- wherein if the supplied hash value is identical to at least one hash value already saved in the database, a reference to data sets containing respective parts of the data of the headers (20) is stored at an address in the database which corresponds to the hash value.

5. The method according to any one of the preceding claims,
- wherein the header (20) contains a transmission time and a sender position as the data.

6. The method according to Claim 5,
- wherein the part of the data of the header (20) contains the transmission time and the sender position.

7. The method according to Claim 5 or 6,
- wherein the part of the data of the header (20) contains the sender position, and
- wherein the transmitter position is only partially stored, in particular omitting rough position information.

8. The method according to any one of the preceding claims,
- wherein the database is a neighbourhood table.

9. The method according to any one of the preceding claims, which further has the following step:
- checking whether a data set is already saved in the database, in which data set the hash value and part of the data of the header (20) are identical.

10. The method according to Claim 9,
- wherein if a data set having an identical hash value and identical part of the header (20) has been established, the message (10) is not further processed, and/or is not forwarded, and/or is only forwarded if the forwarding conditions of ETSI GeoNetworking are fulfilled, and/or its hash value and its part of the data of the header (20) are not saved in the database.

11. The method according to any one of the preceding claims,
- wherein the hash value is calculated without previously decoding the body (30).

12. The method according to any one of the preceding claims,
- wherein the hash function is selected from the following group of hash functions:
- MD2,
- MD4,
- MD5,
- MD6,
- SHA-1,
- SHA-256,
- SHA-384,
- SHA-512,
- Whirlpool,
- CRC, in particular crc32,
- FFT.

13. An electronic control device, in particular a vehicle-to-X communication device, which is configured to carry out a method according to any one of the preceding claims.

14. The electronic control device according to Claim 13,
- which has hardware acceleration for the hash function.

15. A non-volatile, machine-readable storage medium, on which program code is saved, during the running of which a method according to any one of Claims 1 to 12 is carried out.

## Revendications

1. Procédé pour le traitement d'un message de véhicule à X (10),
lequel présente une partie d'en-tête (20) contenant une donnée et une partie principale (30) contenant une donnée,
**caractérisé en ce que** le procédé présente les étapes suivantes :
- application d'une fonction de hachage à la partie principale (30), laquelle fournit une valeur de hachage, et
- enregistrement de la valeur de hachage et d'au moins une partie des données de la partie d'en-tête (20) dans une base de données.

2. Procédé selon la revendication 1,
- la valeur de hachage étant enregistrée dans la base de données par le fait qu'elle est enregistrée dans la base de données comme partie d'un jeu de données, lequel contient également la partie des données de la partie d'en-tête (20).

3. Procédé selon la revendication 1,
- la valeur de hachage étant enregistrée dans la base de données par le fait qu'un jeu de données, lequel contient la partie des données de la partie d'en-tête (20), est enregistré à une adresse dans la base de données correspondant à la valeur de hachage.

4. Procédé selon la revendication 3,
- un renvoi à des jeux de données contenant des parties respectives des données des parties d'en-tête (20) étant enregistré à une adresse dans la base de données, laquelle correspond à la valeur de hachage, lorsque la valeur de hachage fournie est identique à au moins une valeur de hachage déjà enregistrée dans la base de données.

5. Procédé selon l'une quelconque des revendications précédentes,
- la partie d'en-tête (20) contenant une date d'émission et une position d'émetteur comme données.

6. Procédé selon la revendication 5,
- la partie des données de la partie d'en-tête (20) contenant la date d'émission et la position d'émetteur.

7. Procédé selon la revendication 5 ou 6,
- la partie des données de la partie d'en-tête (20) contenant la position d'émetteur, et
- la position d'émetteur n'étant enregistrée que partiellement, en particulier en excluant des indications de position approximatives.

8. Procédé selon l'une quelconque des revendications précédentes,
- la base de données étant une table de voisinage ou « neighbourhood table ».

9. Procédé selon l'une quelconque des revendications précédentes, lequel présente en outre l'étape suivante :
- vérifier si un jeu de données pour lequel la valeur de hachage et la partie des données de la partie d'en-tête (20) sont identiques est déjà enregistré dans la base de données.

10. Procédé selon la revendication 9,
- lorsqu'un jeu de données avec valeur de hachage identique et partie de partie d'en-tête (20) identique a été identifié, le message (10) n'étant plus traité, et/ou n'étant pas transmis, et/ou n'étant transmis que lorsque les conditions de transmission du GeoNetworking ETSI sont remplies, et/ou leur valeur de hachage et leur partie des données de la partie d'en-tête (20) n'étant pas enregistrées dans la base de données.

11. Procédé selon l'une quelconque des revendications précédentes,
- la valeur de hachage étant calculée sans décoder avant la partie principale (30).

12. Procédé selon l'une quelconque des revendications précédentes,
- la fonction de hachage étant sélectionnée parmi le groupe suivant de fonctions de hachage :
- MD2,
- MD4,
- MD5,
- MD6,
- SHA-1,
- SHA-256,
- SHA-384,
- SHA-512,
- Whirlpool,
- CRC, en particulier crc32,
- FFT.

13. Dispositif de commande électronique, en particulier dispositif de communication de véhicule à X,
- lequel est configuré pour exécuter un procédé selon l'une quelconque des revendications précédentes.

14. Dispositif de commande électronique selon la revendication 13,
- lequel présente une accélération matérielle pour la fonction de hachage.

15. Support mémoire non volatile lisible par machine, sur lequel un code de programme est enregistré, lors de l'exécution duquel un procédé selon l'une quelconque des revendications 1 à 12 est exécuté.
